# DEMANDE DE BREVET EUROPEEN

(11) **EP 4 106 072 A1**
(43) Date de publication de la demande: **21.12.2022**
(21) Numéro de dépôt: 22179676.6
(22) Date de dépôt: 17.06.2022
(51) Int. Cl.: H01M 10/0569, H01M 10/052, H01M 12/08, H01M 4/38, H01M 10/0568

(54) **ELECTROLYTE LIQUIDE POUR BATTERIE MÉTAL/OXYGÈNE**

(30) Priorité: 17.06.2021 FR 2106413
(71) Demandeur: Commissariat à l'Energie Atomique et aux Energies Alternatives, 75015 Paris (FR); Thales DIS France SA, 92190 Meudon (FR)
(72) Inventeur: CHAVILLON, Benoît, 38054 GRENOBLE CEDEX 09 (FR); DEILHES, Claire, 38054 GRENOBLE CEDEX 09 (FR)
(74) Mandataire: Nony

(57) **Abrégé**

La présente invention concerne un électrolyte liquide pour une batterie métal/oxygène, comprenant :
- au moins un sel de métal alcalin ou alcalino-terreux, en particulier un sel de lithium ;
- au moins un solvant fluorocarboné possédant une solubilité pour l'oxygène d'au moins 30 % v/v ;
- au moins un agent solubilisant fluoré, distinct du ou desdits solvants fluorocarbonés, choisi parmi des composés hydrocarbonés mono-, poly- ou per-fluorés, saturés, insaturés et/ou aromatiques, linéaires, ramifiés et/ou cycliques ayant de 4 à 18 atomes de carbone, dont l'enchainement carboné est porteur d'au moins un motif terminal polaire ; et
- au moins un solvant de type éther.

Elle concerne également une batterie métal/oxygène, en particulier lithium/oxygène comprenant un tel électrolyte liquide, ainsi qu'un objet portable comprenant une telle batterie.

## Description

### Domaine technique

La présente invention concerne le domaine des batteries métal/oxygène, telles que les batteries lithium/oxygène. Elle se rapporte plus particulièrement à un nouvel électrolyte liquide pouvant être utilisé dans de telles batteries métal/oxygène.

### Technique antérieure

Les batteries métal/oxygène, encore dénommées batteries métal/air, sont une catégorie de générateurs électrochimiques, dans lesquels l'oxygène, issu de l'environnement ambiant, est réduit en surface de la cathode. La réduction de l'oxygène forme un ion oxyde ou peroxyde qui réagit avec une espèce métallique cationique.

Les batteries métal/air les plus connues et qui font l'objet de nombreuses recherches sont notamment les batteries zinc/oxygène, magnésium/oxygène, aluminium/oxygène ou lithium/oxygène.

D'une manière générale, dans ces batteries, l'oxygène figure le matériau actif de l'électrode positive. Il est un oxydant puissant, léger et disponible partout « gratuitement». De plus, suivant la conception du système, il est possible de ne pas le stocker initialement dans la batterie. L'oxygène peut ainsi être prélevé directement dans l'atmosphère *via* l'utilisation d'une cathode à air mettant en œuvre une membrane filtrante, pour l'alimentation sélective en oxygène. Ces systèmes possèdent donc théoriquement une grande densité d'énergie massique.

Afin de conserver les avantages liés à l'utilisation de l'oxygène, le matériau de l'électrode négative d'une batterie métal/air doit posséder plusieurs caractéristiques. Sa masse molaire doit être faible et la charge portée par ses espèces (cations) oxydées doit être grande pour offrir un maximum de densité de capacité (par unité de poids ou volume). Il doit être un réducteur puissant pour fournir une tension importante aux bornes de la batterie et ainsi une grande densité énergétique. Enfin, il doit être abondant et de faible coût pour des raisons économiques évidentes. Les éléments répondant à ces exigences sont notamment le lithium, aluminium, magnésium, calcium, fer et de zinc, le lithium apparaissant toutefois comme le meilleur choix pour le développement de systèmes électrochimiques à forte densité d'énergie massique.

Pour des raisons évidentes, l'optimisation des performances des batteries métal/oxygène, et en particulier de type lithium/oxygène, relève d'un objectif permanent.

La formulation de l'électrolyte utilisé dans les batteries métal/oxygène, notamment lithium/oxygène, revêt à ce titre un caractère essentiel pour agir sur les performances du système électrochimique.

Cet électrolyte doit bien entendu présenter une bonne conductivité ionique pour assurer la mobilité des ions entre les électrodes positive et négative, mais également être apte à solubiliser une grande quantité d'oxygène.

D'autres paramètres interviennent également dans le choix de l'électrolyte mis en œuvre. L'électrolyte liquide doit ainsi présenter une bonne stabilité électrochimique au sein du système électrochimique ; il doit également conserver une faible viscosité et demeurer liquide sur une large gamme de température.

D'une manière générale, aucun solvant ne permet à lui seul de satisfaire l'ensemble de ces exigences. Des recherches ont ainsi porté sur la formulation d'électrolytes liquides associant plusieurs solvants.

Comme solvants électrolytiques usuellement retenus pour cet usage, peuvent être tout particulièrement cités les solvants polaires aprotiques, tels que les solvants carbonatés, comme par exemple le carbonate d'éthylène, le carbonate de propylène, le carbonate de diméthyle, le carbonate de dipropyle et le carbonate d'éthylméthyle.

Le document US 2010/0266907 a également fait état de l'aptitude des solvants perfluorocarbonés à dissoudre l'oxygène, et de leur intérêt à titre d'électrolyte d'une électrode positive dans une pile métal/ion, pour augmenter le potentiel de la cathode. Malheureusement, ce type de solvant ne s'avère pas être compatible avec la dissolution simultanée de sels de lithium. C'est en particulier le cas pour des sels Li₂CoPO₄F, LiNiO₆Mn₁,₄O₄ ou encore LiCoPO₄, particulièrement intéressants dans la mesure où ils permettent notamment d'accéder à des potentiels plus élevés, de l'ordre de 4,3 à 4,4 V, sans requérir l'usage d'additifs.

On peut également citer le document WO 2017/050672 qui propose de formuler un électrolyte liquide pour des batteries métal/oxygène, associant des solvants fluorocarbonés avec des sels de lithium et des solvants carbonatés. Comme illustré dans la partie exemples, ces électrolytes liquides présentent toutefois l'inconvénient de conduire à une faible capacité en décharge des piles lithium/air, du fait de réactions secondaires importantes entre l'électrolyte et le lithium métal.

On peut encore citer le document CN 103996892 qui décrit des électrolytes pour des batteries lithium/air, formés d'éther(s) et d'un sel de lithium, permettant d'accéder à une bonne stabilité et une capacité de 1000 mAh/g à 100 mAh/g en rechargeable.

### Résumé de l'invention

La présente invention vise à proposer un nouvel électrolyte liquide présentant une stabilité électrochimique améliorée, permettant d'accéder à une batterie métal/oxygène, notamment une batterie lithium/oxygène, ayant des performances électrochimiques améliorées, en particulier présentant une capacité, récupérée en décharge, élevée.

Ainsi, l'invention concerne, selon un premier de ses aspects, un électrolyte liquide pour une batterie métal/oxygène, comprenant :
- au moins un sel de métal alcalin ou alcalino-terreux, en particulier un sel de lithium ;
- au moins un solvant fluorocarboné possédant une solubilité pour l'oxygène d'au moins 30 % v/v ;
- au moins un agent solubilisant fluoré, distinct du ou desdits solvants fluorocarbonés, choisi parmi des composés hydrocarbonés mono-, poly- ou per-fluorés, saturés, insaturés et/ou aromatiques, linéaires, ramifiés et/ou cycliques, ayant de 4 à 18 atomes de carbone, dont l'enchainement carboné est porteur d'au moins un motif terminal polaire, et éventuellement interrompu par un ou plusieurs hétéroatomes, notamment choisis parmi les atomes d'oxygène et de soufre et les radicaux -N(R¹)-, -B(R¹)- et -P(R¹R²)-, avec R¹ et R², identiques ou différents, représentant un atome d'hydrogène ou un radical alkyle en C₁ à C₄ ; et
- au moins un solvant de type éther.

L'invention concerne également l'utilisation d'un électrolyte liquide selon l'invention, tel que défini précédemment, dans une batterie métal/oxygène, et plus particulièrement dans une batterie lithium/oxygène.

Elle concerne encore une batterie métal/oxygène, en particulier une batterie lithium/oxygène, mettant en œuvre un électrolyte liquide selon l'invention.

Une batterie métal/oxygène selon l'invention peut être intégrée à un objet portable tel qu'une carte à puce complexe. Cette batterie peut éventuellement permettre des fonctions complémentaires à travers l'alimentation de composants embarqués dans l'objet, tels que par exemple : un microprocesseur, une horloge temps réel, un clavier, un afficheur, un buzzer, une interface bluetooth, un ou divers capteur(s) biométrique(s), une source de lumière, l'émission d'un signal radio (fréquences diverses), etc.

Ainsi, l'invention concerne encore, selon un autre de ses aspects, un objet portable comprenant une batterie métal/oxygène selon l'invention.

L'objet portable peut avoir la forme d'une carte à puce ou celle d'un objet portable tel qu'un bracelet, un clip, un pendentif, une bague, des lunettes par exemple.

Comme illustré dans les exemples qui suivent, les inventeurs ont montré que la mise en œuvre d'un solvant éther, en combinaison avec un solvant fluorocarboné et un agent solubilisant fluoré tels que définis précédemment, pour former le milieu solvant d'un électrolyte liquide, permet d'accéder à des propriétés particulièrement avantageuses.

En particulier, l'électrolyte liquide selon l'invention, mis en œuvre comme électrolyte d'une batterie métal/oxygène, en particulier une batterie lithium/oxygène, permet de conduire à une capacité, récupérée en décharge de la batterie métal/oxygène, élevée, et notamment significativement améliorée comparativement aux électrolytes liquides tels que décrits dans la demande WO2017/050672, mettant en œuvre des solvants carbonatés.

L'électrolyte liquide selon l'invention présente ainsi une stabilité électrochimique améliorée. Il présente notamment une meilleure stabilité chimique, autrement dit engendre moins de réactions secondaires en vieillissement calendaire, et donc une autodécharge de la batterie intégrant un tel électrolyte liquide moins importante.

Un électrolyte liquide selon l'invention permet par exemple d'accéder à une pile lithium/oxygène de capacité supérieure à 5 mAh/cm².

Également, l'électrolyte liquide selon l'invention répond aux exigences, discutées précédemment, requises pour sa mise en œuvre dans une batterie métal/oxygène, en particulier lithium/oxygène.

En particulier, un électrolyte liquide selon l'invention assure pleinement la double fonction de solubilisation du sel de métal alcalin ou alcalino-terreux, dit encore « sel support » et de solubilisation de l'oxygène.

L'aptitude à solubiliser le sel support, par exemple le sel de lithium, est notamment reflétée par le fait que l'électrolyte liquide est monophasique. Au sens de l'invention, un milieu « monophasique » est un milieu dont l'examen microscopique ne permet pas de discerner plus d'une phase. En d'autres termes, le sel support est présent à l'état de soluté dans le milieu électrolyte de l'invention. A ce titre, le milieu électrolyte selon l'invention est distinct d'une dispersion, dans laquelle le sel support est présent, en tout ou partie, à l'état particulaire.

Cette solubilité du sel support dans le milieu solvant de l'électrolyte liquide selon l'invention peut éventuellement avoir été préalablement obtenue par chauffage de l'électrolyte. En revanche, cet état de solubilisation, atteint sous chauffage, perdure lorsque l'électrolyte est refroidi à température ambiante. Par « température ambiante », on entend une température de 20 °C ± 2 °C.

De même, l'agent solubilisant fluoré, le solvant fluorocarboné et le solvant de type éther mis en œuvre conjointement pour former le milieu solvant de l'électrolyte liquide selon l'invention manifestent avantageusement, en présence du sel support, une affinité les uns vis-à-vis des autres. L'électrolyte liquide selon l'invention n'est avantageusement pas sujet à un phénomène de démixtion, susceptible de séparer le solvant fluoré, l'agent solubilisant et/ou le solvant de type éther du reste de la formulation.

Par ailleurs, l'électrolyte liquide selon l'invention est avantageusement un électrolyte non aqueux. Par « non aqueux », on entend signifier que l'électrolyte liquide incorpore moins de 100 ppm massique d'eau, voire est totalement exempt d'eau. Il permet ainsi avantageusement de s'affranchir des problématiques de protection du lithium en milieu aqueux, dans le cadre de sa mise en œuvre pour des batteries lithium/oxygène.

Également, l'électrolyte liquide selon l'invention présente d'excellentes performances en termes de conductivité ionique. Il présente avantageusement une conductivité ionique, mesurée à 25 °C, supérieure à 10⁻⁵ S.cm⁻¹, en particulier supérieure ou égale à 5.10⁻⁵ S.cm⁻¹, voire supérieure à 10⁻⁴ S.cm⁻¹.

Il présente avantageusement de bonnes performances électrochimiques dans une large fenêtre de potentiel, en particulier dépassant 4 V vs. Li⁺/Li.

De manière avantageuse, la vitesse de réaction au sein de la batterie métal/oxygène selon l'invention est accrue, du fait que le siège de la réaction ne se déroule plus en point triple (réaction entre trois phases), mais en point double (réaction entre deux phases).

Par ailleurs, l'électrolyte liquide selon l'invention permet un stockage de l'oxygène en solution. Une telle aptitude constitue un avantage majeur : de fait, si, pour une raison quelconque, il arrive que la batterie ne soit plus en contact avec l'air extérieur, elle pourra continuer à fonctionner grâce à l'oxygène dissous dans l'électrolyte.

D'autres caractéristiques, variantes et avantages des électrolytes liquides et de leur mise en œuvre dans des batteries métal/oxygène selon l'invention ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] présente les courbes d'évolution du potentiel (V) en fonction de la capacité (mAh) en régime de décharge de chacune des cellules préparées en exemple 1, mettant en œuvre respectivement un électrolyte liquide 1 selon l'invention et un électrolyte non conforme 3 ;
[Fig 2] présente les courbes d'évolution du potentiel (V) en fonction de la capacité (mAh) en régime de décharge de chacune des cellules préparées en exemple 2, mettant en œuvre respectivement un électrolyte liquide 1 selon l'invention et un électrolyte non conforme 3.

### Description détaillée

### ELECTROLYTE LIQUIDE

### MILIEU SOLVANT

Comme indiqué précédemment, le milieu solvant d'un électrolyte liquide selon l'invention associe au moins trois composés distincts :
- au moins un solvant fluorocarboné ;
- au moins un agent solubilisant fluoré ; et
- au moins un solvant de type éther.

Dans le cadre de l'invention, on entend par :
- « C_{t-z} » où t et z sont des entiers, une chaine carbonée pouvant avoir de t à z atomes de carbone ; par exemple C₁₋₄ une chaîne carbonée qui peut avoir de 1 à 4 atomes de carbone, dite encore chaîne carbonée en C₁ à C₄ ;
- « alkyle », un groupe aliphatique saturé, linéaire ou ramifié ; par exemple un groupe C₁₋₄-alkyle représente une chaîne carbonée de 1 à 4 atomes de carbone, linéaire ou ramifiée, plus particulièrement un méthyle, éthyle, propyle, isopropyle, butyle, isobutyle, *tert*-butyle.

- « alkylène », un groupe divalent saturé, linéaire ou ramifié, de formule brute -CₘH₂ₘ-, dans laquelle m est un entier, obtenu en enlevant deux atomes d'hydrogène à un alcane. A titre d'exemples, on peut citer les groupes méthylène (-CH₂-), éthylène (-CH₂CH₂-), propylène (-CH₂CH₂CH₂-), butylène (-CH₂CH₂CH₂CH₂-). Le groupe alkylène peut être plus particulièrement de formule -(CH₂)ₘ-, m représentant un nombre entier.
- « cyclique », un groupe monocylique ou polycyclique. Un groupement « polycyclique » est un groupe présentant deux ou plusieurs noyaux (cycles), condensés (ortho-condensés ou ortho- et péri-condensés) les uns aux autres, c'est-à-dire présentant, deux à deux, au moins deux carbones en commun.
- un radical ou une chaîne « perfluorocarboné(e) », un groupe composé d'atomes de carbone et d'atomes de fluor. Par exemple, il peut s'agir d'un groupe perfluoroalkyle, tels qu'un groupe perfluorooctyle, ou encore, lorsque la chaîne est divalente, c'est-à-dire placée entre deux autres groupes, d'un groupe perfluoroalkylène.

### Solvant fluorocarboné

Comme indiqué précédemment, un électrolyte liquide selon l'invention comprend un ou plusieurs solvants fluorocarbonés, dits encore « fluorocarbones ».

Dans la suite du texte, on désigne par « solvant fluorocarboné », un unique solvant fluorocarboné ou mélange d'au moins deux solvants fluorocarbonés.

Au sens de l'invention, un solvant fluorocarboné désigne un composé fluide à température ambiante et pression atmosphérique, et dont le squelette carboné comprend au moins un, de préférence plusieurs, atomes de fluor, voire est avantageusement perfluoré. Avantageusement, le ou les solvants fluorocarbonés considérés selon l'invention sont d'excellents solvants de l'oxygène. En particulier, la solubilité de l'oxygène dans un solvant fluorocarboné selon l'invention est d'au moins 30 % volumique (30% v/v).

Cette solubilité est appréciée à température ambiante et pression atmosphérique. Elle peut notamment être évaluée par la méthode de WINKLER consistant à saturer en oxygène un milieu liquide et à évaluer la différence de volume du milieu liquide.

Au sens de l'invention, un solvant fluorocarboné peut comprendre des atomes d'hydrogène, d'oxygène, de soufre, d'azote et/ou de phosphore.

Dans un mode de réalisation particulier, le solvant fluorocarboné est dénué d'atome d'oxygène, de soufre, d'azote et de phosphore.

Le composé fluorocarboné mis en œuvre pour former un électrolyte liquide selon l'invention peut être formé uniquement d'atomes de carbone, d'hydrogène et de fluor.

Selon un mode de réalisation particulier, le composé fluorocarboné selon l'invention comprend un squelette hydrocarboné, saturé, insaturé et/ou aromatique, linéaire, ramifié et/ou cyclique, ayant de 4 à 18 atomes de carbone, substitué par un ou plusieurs, de préférence plusieurs atomes de fluor.

A titre d'exemples de solvants fluorocarbonés, peuvent être cités le décafluoropentane (C₅H₂F₁₀), le 1H-perfluorohexane (C₆HF₁₃), le nonafluorohexane (C₆H₅F₉), le pentafluorohexane (C₆H₉F₅), l'heptafluorocyclopentane (C₅H₃F₇), le perfluorohexane (C₆F₁₄), le perfluoroheptane (C₇F₁₆), le perfluorooctane (C₈F₁₈), le 1H-perfluorooctane (C₈HF₁₇), le perfluorononane (C₉F₂₀), la perfluorodécaline (C₁₀F₁₈).

Selon un mode de réalisation particulier, le solvant fluorocarboné est perfluoré ; autrement dit, il est composé uniquement d'atomes de carbone et de fluor.

En particulier, les solvants fluorocarbonés mis en œuvre pour former un électrolyte liquide selon l'invention peuvent être choisis parmi les composés perfluorocarbonés, saturés, insaturés et/ou aromatiques, linéaires, ramifiés et/ou cycliques, ayant de 4 à 18 atomes de carbone.

Le ou lesdits composés fluorocarbonés mis en œuvre selon l'invention peuvent ainsi être de formule brute (I) suivante :

[Chem 1] CₐF_{b} (I)

avec a représentant un entier compris entre 4 et 18, et b étant un entier ≥ a.

En particulier, le composé fluorocarboné peut être de formule (I) précitée dans laquelle a est compris entre 6 et 12, en particulier a vaut 10.

Selon un mode de réalisation particulier, le ou lesdits solvants fluorocarbonés sont choisis parmi des composés perfluorocarbonés saturés, dits encore perfluoroalcanes, linéaires ou cycliques, en particulier en C₆ à C₁₂.

Selon un mode de réalisation particulier, un électrolyte liquide selon l'invention peut comprendre au moins un perfluoroalcane, linéaire ou cyclique, notamment cyclique, en particulier en C₆ à C₁₂.

En particulier, le solvant fluorocarboné mis en œuvre dans un électrolyte liquide selon l'invention peut être un perfluoroalcane cyclique, notamment en C₆ à C₁₂.

Dans un mode de réalisation particulier, le solvant fluorocarboné est la perfluorodécaline.

Selon un mode de réalisation particulier, le ou les solvants fluorocarbonés, en particulier perfluorocarbonés, notamment de type perfluoroalcane, par exemple la perfluorodécaline, peu(ven)t représenter de 20 à 90 % volumique, notamment de 50 à 90 % volumique, en particulier de 60 à 90 % volumique, et notamment de 60 à 70 % volumique, du volume total de l'électrolyte liquide selon l'invention.

En particulier, le ou lesdits solvants fluorocarbonés peu(ven)t être présent(s), au niveau de l'électrolyte liquide selon l'invention, dans un rapport molaire solvant(s) fluorocarboné(s)/sel(s) support, compris entre 1 et 5, en particulier entre 2 et 3.

### Agent solubilisant fluoré

Comme indiqué précédemment, un électrolyte liquide selon l'invention associe au(x) solvant(s) fluorocarboné(s), tel(s) que décrit(s) précédemment, au moins un agent solubilisant fluoré.

Dans la suite du texte, on entend par « agent solubilisant », un unique agent solubilisant fluoré ou un mélange d'au moins deux agents solubilisants fluorés.

L'agent solubilisant mis en œuvre selon l'invention permet notamment de solubiliser le sel support, et de garantir sa présence dans le milieu électrolytique à l'état de soluté, même en présence du ou desdits solvants fluorocarbonés.

Par ailleurs, il importe que l'agent solubilisant n'affecte pas la stabilité électrochimique, ni la capacité solubilisante à l'égard de l'oxygène, du milieu électrolytique.

L'agent solubilisant considéré selon l'invention est un composé fluoré, distinct du ou desdits solvants fluorocarbonés conjointement mis en œuvre dans l'électrolyte liquide selon l'invention, est doté d'un caractère que l'on peut qualifier d'amphiphile, à l'image notamment des tensioactifs, et possède une polarité supérieure à celle du ou desdits solvants fluorocarbonés.

L'agent solubilisant considéré selon l'invention est plus particulièrement un composé hydrocarboné mono-, poly- ou per-fluoré, saturé, insaturé et/ou aromatique, linéaire, ramifié et/ou cyclique ayant de 4 à 18 atomes de carbone, dont l'enchainement carboné est porteur d'au moins un motif terminal polaire, et éventuellement interrompu par un ou plusieurs hétéroatomes, notamment choisis parmi les atomes d'oxygène et de soufre et les radicaux - N(R¹)-, -B(R¹)- et -P(R¹R²)- avec R¹ et R², identiques ou différents, représentant un atome d'hydrogène ou un groupe alkyle en C₁ à C₄.

Au sens de l'invention, un motif terminal polaire désigne un groupement fonctionnel en extrémité libre sur le squelette carboné de l'agent solubilisant, c'est-à-dire en extrémité terminale de la chaine carbonée principale ou en extrémité d'un radical carboné constituant une ramification de cette chaîne si présent, ce motif étant de nature à conférer à l'agent solubilisant une affinité pour le sel de métal alcalin ou alcalino-terreux avec lequel il est associé au niveau de la formulation de l'électrolyte liquide.

Selon un mode de réalisation particulier, l'agent solubilisant répond à la formule générale (II) suivante :

[Chem 2] Z-[(C_{c}F_{2c})-(X)ₙ]_{q}-(CₑH₂ₑ)ₚ-Y (II)

dans laquelle :
- C_{c}F_{2c} représente un groupement perfluorocarboné saturé, linéaire ou ramifié, avec c représentant un entier allant de 4 à 18 ; - X est choisi parmi les atomes d'oxygène et de soufre, et les radicaux -N(R¹)-, -B(R¹)- et - P(R¹R²)-, avec R¹ et R², identiques ou différents, représentant un atome d'hydrogène ou un radical alkyle en C₁ à C₄,
- n est égal à 0 ou 1,
- q est égal à zéro ou est un entier variant de 1 à 15, étant entendu que, lorsque q est supérieur ou égal à 2, X, c et n peuvent être identiques ou différents dans chacune des unités -[(C_{c}F_{2c})-(X)_{n]}- ; de préférence q est différent de zéro ;
- CₑH₂ₑ représente un radical hydrocarboné saturé, linéaire ou ramifié, avec e représentant un entier allant de 1 à 12 ;
- p est égal à 0 ou 1, - Z représente un atome d'hydrogène, de fluor ou un groupement hydroxyle, et Y représente un groupement -OH, -OR³, -OM, -NH₂, -NHR³, -N(R³)₂, -N(R³)₃⁺, -COOH, -COOM, -COOR³, -OCOR³, -CN, -SO₃H, -SO₃M, avec R³ étant un radical alkyle en C₁ à C₄ et M un ion métallique, en particulier un cation de métal alcalin ou alcalino-terreux, par exemple lithium ; ou Z et Y sont liés l'un à l'autre pour former un motif polaire de type oxo, éther ou ester.

Avantageusement, cet agent solubilisant présente une partie polaire notamment au regard de la présence du groupement polaire Y tel que défini ci-dessus.

De manière avantageuse, l'agent solubilisant, notamment du fait de la présence d'un tel motif polaire, manifeste une affinité pour le ou les sels alcalins ou alcalino-terreux auxquels il est associé au sein de l'électrolyte liquide selon l'invention. Qui plus est, la présence du squelette fluorocarboné procure à l'agent solubilisant selon l'invention une affinité pour le ou les solvants fluorocarbonés tels que décrits précédemment, avec le ou lesquels il est mis conjointement en œuvre au niveau de l'électrolyte liquide selon l'invention.

De préférence, q, dans la formule (II) précitée, peut être égal à 1.

De préférence, n, dans la formule (II) précitée, peut être égal à 0.

De préférence, p, dans la formule (II) précitée, peut être égal à 1.

De préférence, c, dans la formule (II) précitée, peut être compris entre 4 et 8.

De préférence, e, dans la formule (II) précitée, peut être compris entre 1 et 4, en particulier vaut 1.

Selon un mode de réalisation particulier, l'agent solubilisant est un composé de formule (II), saturé, notamment en C₇ à C₁₅.

En particulier, l'agent solubilisant peut être un composé de formule (II), linéaire et saturé, en particulier en C₇ à C₁₅.

Selon un mode de réalisation particulier, l'agent solubilisant est un composé de formule (II) dans laquelle q est égal à 1, n est égal à 0 et p est égal à 1.

En particulier, l'agent solubilisant peut être de formule (II) dans laquelle c est compris entre 4 et 8, et e est compris entre 1 et 4, en particulier vaut 1.

Selon un mode de réalisation particulier, Y, dans la formule (II) précitée, est choisi parmi les groupements -OH, -OR¹, -OM, -COOM, -COOR¹ et -OCOR¹, avec M et R¹ étant tels que définis ci-dessus.

De préférence, Y est un groupement -OH.

Selon un mode de réalisation particulier, Z est un atome de fluor.

Il est entendu que les différents modes de réalisation précités peuvent être combinés, dans la mesure du possible, pour définir des composés de formule (II) plus particulièrement considérés selon l'invention.

Ainsi, selon un mode de réalisation particulier, l'agent solubilisant fluoré mis en œuvre dans un électrolyte liquide selon l'invention répond à la formule (II') suivante :

[Chem 3] F-(C_{c}F_{2c})-(CₑH₂ₑ)ₚ-Y (II')

dans laquelle Y, c, e et p sont tels que définis ci-dessus.

Dans la formule (II') précitée, c peut être plus particulièrement compris entre 4 et 8.

Dans la formule (II') précitée, e peut être plus particulièrement compris entre 1 et 4, en particulier vaut 1.

Dans la formule (II'), Y peut être plus particulièrement un groupement -OH ou un groupement -COOR¹, avec R¹ étant tel que défini précédemment ; en particulier Y est un groupement -OH.

Selon un mode de réalisation particulier, l'agent solubilisant est de formule (II') précitée, dans laquelle p vaut 1.

Selon un autre mode de réalisation particulier, l'agent solubilisant est de formule (II') dans laquelle p vaut 0. Autrement dit, l'agent solubilisant mis en œuvre selon l'invention peut répondre à la formule (II") suivante :

[Chem 4] F-(CₑF_{2c})-Y (II")

dans laquelle Y et c sont tels que définis précédemment.

En particulier, Y dans la formule (II") précitée peut être un groupement -OH ou un groupement -COOR¹, avec R¹ étant tel que défini précédemment ; notamment Y est un groupement -OH.

Dans la formule (II") précitée, c peut être plus particulièrement compris entre 4 et 8, en particulier vaut 8.

Ainsi, dans un mode de réalisation particulier, l'agent solubilisant mis en œuvre pour former un électrolyte liquide selon l'invention peut être choisi parmi les perfluoroalcanols et les perfluoroesters d'alkyle, en particulier en C₇ à C₁₅.

Selon un mode de réalisation particulier, l'agent solubilisant est choisi parmi les perfluoroalcanols, en particulier les perfluoroalcanols acycliques, notamment en C₇ à C₁₅. A titre d'exemple, l'agent solubilisant peut être le perfluorooctanol.

Le ou lesdits agent(s) solubilisant(s) fluoré(s), en particulier de type perfluoroalcanol, par exemple le perfluorooctanol, peu(ven)t représenter de 5 à 60 % volumique, en particulier de 10 à 40 %, notamment de 10 à 25 % volumique, du volume total de l'électrolyte liquide selon l'invention.

En particulier, le ou ledits agent(s) solubilisant(s) fluoré(s), par exemple de type perfluoroalcanol, peu(ven)t être présent(s) au niveau de l'électrolyte liquide selon l'invention dans un rapport molaire agent(s) solubilisant(s)/sel(s) support, compris entre 1 et 5, en particulier entre 1,5 et 2,5.

Selon un mode de réalisation particulier, un électrolyte liquide selon l'invention peut comprendre le ou lesdits solvants fluorocarbonés et le ou lesdits agents solubilisants fluorés, en particulier tels que définis précédemment, dans un rapport volumique solvant(s) fluorocarboné(s)/agent(s) solubilisant(s), compris entre 10/1 et 3/2, en particulier entre 6/1 et 2/1, notamment entre 5/1 et 3/1 et plus particulièrement d'environ 4/1.

De manière avantageuse, le ou lesdits agents solubilisants fluorés et le ou lesdits solvants fluorocarbonés sont choisis de manière à présenter une excellente compatibilité.

A titre d'exemple, le ou lesdits agents solubilisants fluorés et le ou lesdits solvants fluorocarbonés possèdent respectivement un squelette carboné saturé, acyclique ou cyclique, de préférence perfluoré.

Par exemple, le solvant fluorocarboné peut être un perfluoroalcane en C₆ à C₁₂, tel que par exemple la perfluorodécaline ; et l'agent solubilisant peut être avantageusement de type perfluoroalcanol acyclique.

De préférence, les nombres de carbone respectifs du solvant fluorocarboné et de l'agent solubilisant fluoré diffèrent de moins de cinq atomes de carbone, en particulier de moins de trois atomes de carbone. A titre de couple solvant fluorocarboné/agent solubilisant fluoré peut être cité le couple perfluorodécaline/perfluorooctanol.

L'électrolyte liquide selon l'invention peut ainsi mettre en œuvre au moins la perfluorodécaline à titre de solvant fluorocarboné en association avec au moins du perfluorooctanol à titre d'agent solubilisant fluoré.

### Solvant éther

Comme indiqué précédemment, un électrolyte liquide selon l'invention comprend en outre au moins un solvant de type éther, dit plus simplement dans la suite du texte « solvant éther ». Par « solvant éther », on entend désigner un solvant comportant au moins une fonction éther. Un électrolyte liquide selon l'invention peut comprendre un unique solvant de type éther ou un mélange d'au moins deux solvants de type éther.

Ces solvants de type éther peuvent être désignés comme solvants de dissociation ; ils permettent avantageusement d'augmenter la conductivité ionique du milieu électrolytique les contenant, compte-tenu de leur constante diélectrique élevée. Les solvants éthers considérés selon l'invention peuvent ainsi présenter une constante diélectrique εᵣ, mesurée à 25 °C, supérieure ou égale à 7,5.

Par ailleurs, de manière surprenante, comme illustré dans les exemples qui suivent, les inventeurs ont montré que la mise en œuvre de solvants éthers, à la différence de solvants carbonatés, permet d'accéder à un électrolyte liquide présentant une stabilité électrochimique améliorée, et permettant d'accroître de manière significative la capacité récupérée en décharge de la batterie métal/oxygène dans lequel cet électrolyte est mis en œuvre.

Les solvants éthers mis en œuvre selon l'invention peuvent plus particulièrement répondre à la formule (III) suivante :

[Chem 5] R⁴-O-(Q-O)_{q}-R⁵ (III)

dans laquelle : q vaut 0 ou q est un entier compris entre 1 et 10, en particulier compris entre 1 et 6 ;
Q est un groupe alkylène, linéaire ou ramifié, en C₁ à C₆, en particulier en C₁ à C₄, étant étendu que, lorsque q est supérieur ou égal à 2, les groupes Q peuvent être identiques ou différents, de préférence sont identiques ; R⁴ et R⁵, identiques ou différents, représentent des groupes alkyles en C₁ à C₁₂, ou R⁴ et R⁵ sont liés pour former un groupe C₁-C₄-alkylène.

De préférence, R⁴ et R⁵ dans la formule (III) précitée sont choisis parmi des groupes méthyle et éthyle, en particulier méthyle.

De préférence, q dans la formule (III) précitée est compris entre 1 et 6, en particulier entre 1 et 5 et plus particulièrement entre 1 et 4.

De préférence, Q dans la formule (III) précitée représente un groupe alkylène linéaire, en particulier en C₁ à C₄, notamment un groupe -CH₂CH₂-.

Selon un mode de réalisation particulier, le solvant éther mis en œuvre pour formuler un électrolyte liquide selon l'invention est choisi parmi le 1,3-dioxolane (symbolisé par l'abréviation DIOX), le tétrahydrofurane (symbolisé par l'abréviation THF), les éthers de formule générale CH₃O-[CH₂CH₂O]_{q}-CH₃, avec q étant un entier compris entre 1 et 10, en particulier entre 1 et 6, notamment entre 1 et 5 et plus particulièrement entre 1 et 4, tels que le 1,2-diméthoxyéthane (DME, également connu sous l'appellation monoglyme), le di(2-méthoxyéthyl)éther (ou diglyme), le diméthyléther de triéthylène glycol (ou triglyme) ; le diméthyléther de tétraéthylèneglycol (symbolisé par l'abréviation TEGDME, également connu sous l'appellation tétraglyme) ; et les mélanges de ceux-ci.

Selon un mode de réalisation particulier, le solvant éther est choisi parmi le DME, le TEGDME et leurs mélanges.

### De préférence, le solvant éther est le DME

Le ou lesdits solvant(s) de type éther, en particulier tels que définis précédemment, notamment de formule (III') précité, peu(ven)t représenter de 2 à 30 % volumique, en particulier de 3 à 20 % volumique, notamment 5 à 15 % volumique et plus particulièrement de 5 à 10 % volumique, du volume total de l'électrolyte liquide selon l'invention.

En particulier, le ou lesdits solvants de type éther peuvent être présents, au niveau de l'électrolyte liquide selon l'invention, dans un rapport molaire solvant(s) éther/sel(s) support, compris entre 0,10 et 4,00, en particulier entre 0,30 et 0,80.

Il est entendu que les différents modes de réalisation précités, en particulier en termes de nature et teneur du ou desdits solvant(s) fluorocarboné(s), du ou desdits agent(s) solubilisant(s) fluoré(s) et du ou desdits solvant(s) de type éther, peuvent être combinés dans la mesure du possible.

Ainsi, dans un mode de réalisation particulier, un électrolyte liquide selon l'invention peut comprendre :
- un ou plusieurs solvants fluorocarbonés tels que définis précédemment, en particulier perfluorocarbonés, notamment de type perfluoroalcane, telle que la perfluorodécaline ;
- un ou plusieurs agents solubilisants fluorés tels que définis précédemment, en particulier de formule (II) précitée, notamment de type perfluoroalcanol, tel que le perfluorooctanol ;
- un ou plusieurs solvants éthers, tels que définis précédemment, notamment de formule CH₃O-[CH₂CH₂O]_{q}-CH₃ telle que définie précédemment, par exemple le TEGDME et/ou DME

De manière avantageuse, le ou lesdits solvants fluorocarbonés, le ou lesdits agents solubilisants fluorés et le ou lesdits solvants de type éther, en particulier tels que définis précédemment, représentent plus de 90 % volumique, en particulier plus de 95 % volumique, et plus particulièrement plus de 98 % volumique, du volume total de l'électrolyte liquide selon l'invention.

Selon une variante de réalisation, l'électrolyte liquide selon l'invention peut comprendre en outre un ou plusieurs solvant(s) annexe(s), distincts des solvants précités, tel que par exemple un solvant carbonaté. A titre d'exemples de solvants carbonatés, peuvent être cités le carbonate d'éthylène, le carbonate de propylène, le carbonate de diéthyle, le carbonate d'éthylméthyle, le carbonate de diméthyle et leurs mélanges.

De préférence, le ou lesdits solvants annexes, en particulier de type carbonatés, représentent moins de 10 % volumique du volume total de l'électrolyte liquide selon l'invention, en particulier moins de 5 % volumique et plus particulièrement moins de 1 % volumique, du volume total de l'électrolyte liquide.

Selon une autre variante de réalisation particulièrement préférée, l'électrolyte liquide selon l'invention ne comprend pas de solvant autre que le ou lesdits solvants fluorocarbonés, le ou lesdits agents solubilisants fluorés et le ou lesdits solvants de type éther tels que décrits précédemment.

En particulier, l'électrolyte liquide selon l'invention peut être exempt de solvant carbonaté. Selon un mode de réalisation particulier, le milieu solvant d'un électrolyte liquide selon l'invention comprend, voire est formé :
- de 20 à 90 % volumique, en particulier de 50 à 90 % volumique, d'un ou plusieurs solvants fluorocarbonés, en particulier tels que définis précédemment, en particulier perfluorocarbonés, notamment de type perfluoroalcane, telle que la perfluorodécaline ;
- de 5 à 60 % volumique, en particulier de 10 à 25 % volumique, d'un ou plusieurs agents solubilisants fluorés, en particulier tels que définis précédemment, notamment de formule (II), (II') ou (II") précitée, notamment de type perfluoroalcanol, tel que le perfluorooctanol ; et
- de 2 à 30 % volumique, en particulier de 5 à 15 % volumique, d'un ou plusieurs solvants éthers, en particulier tels que définis précédemment, notamment de formule CH₃O-[CH₂CH₂O]_{q}-CH₃ telle que définie précédemment, par exemple le TEGDME et/ou DME ; les pourcentages volumiques étant donné par rapport au volume de total de l'électrolyte liquide.

Selon un mode de réalisation particulier, l'électrolyte liquide selon l'invention est formé :
- d'un milieu solvant, en particulier tel que défini précédemment, consistant en :
   un ou plusieurs solvants fluorocarbonés, en particulier tels que définis précédemment, en particulier perfluorocarbonés, notamment de type perfluoroalcane, telle que la perfluorodécaline ;
   un ou plusieurs agents solubilisants fluorés, en particulier tels que définis précédemment, notamment de formule (II), (II') ou (II") précitée, notamment de type perfluoroalcanol, tel que le perfluorooctanol ;
   un ou plusieurs solvants éthers, en particulier tels que définis précédemment, notamment de formule CH₃O-[CH₂CH₂O]_{q}-CH₃ telle que définie précédemment, par exemple le TEGDME et/ou DME ; et
- d'un ou plusieurs sels de métal alcalin ou alcalino-terreux, en particulier un sel de lithium.

Selon un mode de réalisation particulier, un électrolyte liquide selon l'invention comprend, voire est formé : de 1 à 5 mol.L⁻¹, en particulier de 2 à 3 mol.L⁻¹, d'un ou plusieurs solvant(s) fluorocarboné(s), en particulier tels que décrits précédemment, par exemple de perfluorodécaline ; de 1 à 5 mol.L⁻¹, en particulier de 1,5 à 2,5 mol.L⁻¹, d'un ou plusieurs agent(s) solubilisant(s) fluoré(s), en particulier tels que définis précédemment, par exemple de perfluorooctanol ; de 0,10 à 4,0 mol.L⁻¹, en particulier de 0,3 à 0,8 mol.L⁻¹, d'un ou plusieurs solvant(s) éther, en particulier tels que définis précédemment, par exemple de TEGDME et/ou DME ; les proportions molaires étant données pour 1 mol.L⁻¹ de sel support, en particulier de sel de lithium.

### SEL DE METAL ALCALIN OU ALCALINO-TERREUX

Comme indiqué précédemment, l'électrolyte liquide selon l'invention comporte au moins un sel de métal alcalin ou alcalino-terreux, dit « sel support », pour assurer la conduction des ions.

Dans le cadre de l'invention, on entend par :
- « métaux alcalins », les éléments chimiques de la première colonne du tableau périodique des éléments, et plus particulièrement choisis parmi le lithium, le sodium, le potassium, le rubidium, le césium. De préférence, le métal alcalin est le lithium, le sodium ou le potassium, et plus préférentiellement le lithium ;
- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

Le sel d'un métal alcalin peut être par exemple un sel de lithium, de sodium ou de potassium ; le sel d'un métal alcalinoterreux peut être par exemple un sel de magnésium. En particulier, le sel mis en œuvre est un sel de lithium.

A titre d'exemples de sel de lithium, on peut citer le LiPF₆, LiClO₄, LiBF₄, LiAsF₆, LiCF₃SO₃, LiN(C₂F₅SO₂)₂, le bis(trifluorométhylsulfonyl)imide de lithium LiN[SO₂CF₃]₂ (connu sous l'abréviation LiTFSI), le bis(fluorosulfonyl)amidure de lithium (connu sous l'abréviation LiFSI) LiN[SO₂F]₂, le lithium 4,5-dicyano-2-(trifluoromethyl)imidazole (connu sous l'abréviation LiTDI), le lithium bispentafluoroéthylsulfonylimide (connu sous l'abréviation LiBETI), le lithium bis(oxalato)borate (connu sous l'abréviation LiBOB) et le lithium difluoro(oxalato)borate (connu sous l'abréviation LiFOB) et les mélanges de ceux-ci.

De préférence, l'électrolyte comporte, comme sel de lithium, du LiTFSI, LiTDI ou LiFSI, de préférence du LiTFSI ou LiFSI et plus préférentiellement du LiTFSI.

Il appartient à l'homme du métier d'ajuster la quantité en sels de métal alcalin ou alcalino-terreux, pour optimiser la conductivité ionique de l'électrolyte. Cette quantité est susceptible de varier en fonction de la nature chimique du sel considéré.

D'une manière générale, le ou lesdits sels de métal alcalin ou alcalino-terreux, en particulier de type sel de lithium, sont mis en œuvre en une teneur allant de 0,1 à 5 mol.L⁻¹ (M), en particulier d'environ 1 mol.L⁻¹, dans l'électrolyte liquide selon l'invention.

A titre d'exemple d'électrolytes liquides selon l'invention peuvent notamment être cités ceux comprenant au moins :
- la perfluorodécaline à titre de solvant fluorocarboné,
- le perfluorooctanol à titre d'agent solubilisant fluoré,
- le TEGDME ou DME à titre de solvant éther, et
- le LiTFSI à titre de sel support, notamment à une concentration molaire de 1 mol.L⁻¹.

Selon un mode de réalisation particulier, l'électrolyte liquide selon l'invention peut être formulé dans une matrice polymérique, afin de former un électrolyte gélifié. La matrice polymérique doit permettre une incorporation maximale de liquide tout en conservant des propriétés mécaniques pour garantir la séparation physique entre les électrodes positive et négative de la cellule électrochimique. Une matrice polymérique peut être par exemple formée à partir de polymères choisis parmi les polyéthers, polyacrylamides, polycarbonates, polyéthersulfones et leurs copolymères.

Alternativement, l'électrolyte liquide selon l'invention peut être amené à imprégner un élément séparateur disposé entre l'électrode négative et l'électrode positive de la cellule électrochimique.

Ce séparateur peut être en un matériau poreux, tel qu'un matériau polymérique, apte à accueillir dans sa porosité l'électrolyte liquide.

### SYSTEME ELECTROCHIMIQUE

L'invention concerne également un système électrochimique comprenant au moins un électrolyte liquide selon l'invention.

En particulier, comme évoqué précédemment, de par sa capacité à solubiliser à la fois un sel de métal alcalin ou alcalino-terreux et une grande quantité d'oxygène, un électrolyte liquide selon l'invention trouve une application particulièrement avantageuse comme électrolyte pour des batteries métal/oxygène.

Par exemple, il peut être mis en œuvre pour une batterie lithium/oxygène, aluminium/oxygène, zinc/oxygène.

Selon un mode de réalisation particulier, l'électrolyte liquide selon l'invention est mis en œuvre pour une batterie lithium/oxygène.

Le reste de la batterie peut être formée selon des méthodes conventionnelles.

De manière classique, une batterie (ou accumulateur) métal/oxygène est formée d'au moins une cellule électrochimique comprenant un séparateur imprégné par l'électrolyte liquide selon l'invention, ou alternativement un électrolyte gélifié obtenu à partir d'un électrolyte liquide selon l'invention, entre une électrode positive et une électrode négative, un collecteur de courant connecté à la cathode et un collecteur de courant connecté à l'anode.

Une batterie métal-oxygène selon l'invention peut comprendre plus particulièrement une électrode négative métallique et une électrode positive réductrice de l'oxygène.

Le matériau actif de l'électrode négative peut être du lithium, aluminium ou zinc métallique, par exemple du lithium métallique dans le cadre d'une batterie lithium/oxygène.

L'électrode positive réductrice de l'oxygène peut comprendre un matériau en carbone, par exemple en fibres de carbone, et un ou plusieurs catalyseurs de la réaction d'oxydoréduction des ions alcalin ou alcalino-terreux, par exemple des ions Li⁺, et de l'oxygène, tels que du platine, du manganèse ou de l'oxyde de manganèse (MnO₂).

Le collecteur de courant connecté à l'électrode positive est en général en aluminium.

Le collecteur de courant connecté à l'électrode négative est en général en cuivre.

De par leur large fenêtre de stabilité électrochimique, leur inertie chimique et leur faible toxicité, les électrolytes liquides selon l'invention peuvent encore trouver des applications particulièrement avantageuses pour des batteries en configuration cation-ion, par exemple une batterie lithium-ion, sodium-ion, potassium-ion, magnésium-ion. Selon un mode de réalisation particulier, un électrolyte liquide selon l'invention peut être mis en œuvre pour une batterie lithium-ion.

L'invention va maintenant être décrite au moyen des exemples et figures suivants, donnés bien entendu à titre illustratif et non limitatif de l'invention.

### Exemple

Dans les exemples qui suivent, les électrolytes liquides présentent les compositions indiquées dans le tableau 1 suivant. Les quantités sont indiquées en concentration molaire mol/L (ou M).

Ils sont obtenus par dissolution du sel de lithium dans un mélange des différents solvants.

**[Tableau 1]**

| **Composés** | **Electrolyte 1 (invention)** | **Electrolyte 2 (invention)** | **Electrolyte 3 (hors invention)** |
|---|---|---|---|
| Perfluorodécaline | 2,55 M | 2,55 M | 2,55 M |
| Perfluorooctanol | 2 M | 2 M | 2 M |
| Tétraéthylène glycol diméthyléther (TEGDME) | 0,45 M | | |
| 1,2-diméthoxyéthane (DME) | | 0,45 M | |
| Carbonate de propylène | | | 0,45 M |
| Sel de lithium LiTFSI | 1 M | 1 M | 1 M |

### Exemple 1

Dans cet exemple, des cellules pouch sans entrée d'oxygène, de 7 x 7 cm² de packaging et de 3 x 3,5 cm² de surface active, sont utilisées.

Elles sont composées de lithium métal, d'un séparateur Celgard^{®} 2320 imprégnée par l'électrolyte liquide et d'une cathode constituée par une feuille de Freudenberg^{®} H2315 recouvert d'une encre contenant du MnO₂. La première cellule contient l'électrolyte 3 indiqué ci-dessus, conforme au brevet WO 2017050672 ; la deuxième cellule contient l'électrolyte 1 conforme à l'invention, mettant en œuvre du tétraéthylène glycol diméthyléther (TEGDME).

Les cellules sont déchargées sous 20°C et 50 µA.

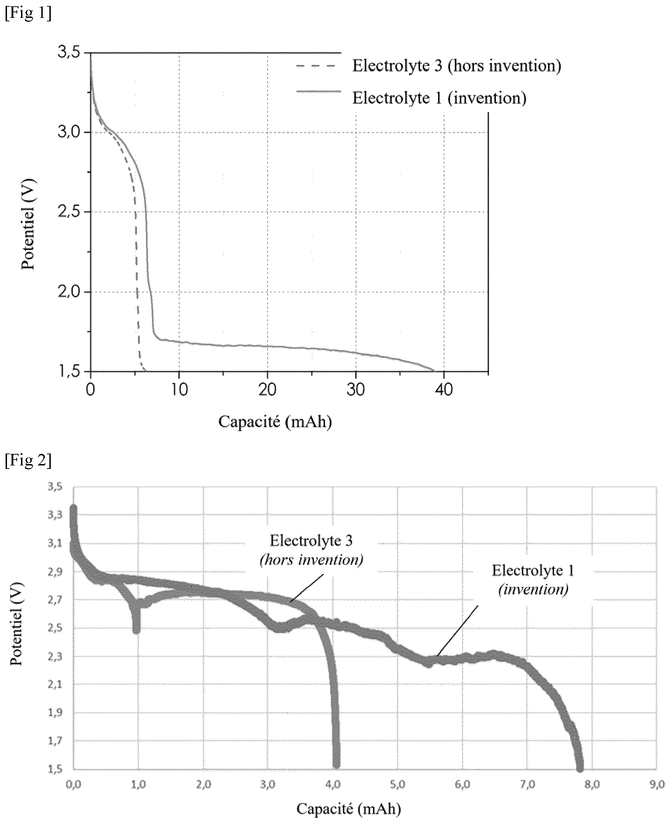

La figure 1 représente l'évolution du potentiel (V) en fonction de la capacité (mAh) en régime de décharge de chacune des cellules mettant en œuvre respectivement l'électrolyte liquide 1 et l'électrolyte comparatif 3.

Il peut être observé que la capacité déchargée est multipliée par 5 en mettant en œuvre l'électrolyte liquide 1 conforme à l'invention, comprenant du TEGDME, comparativement à l'électrolyte 3, comprenant du carbonate de propylène. Ainsi, la stabilité électrochimique de l'électrolyte selon l'invention permet d'utiliser la surcapacité apportée par le catalyseur MnO₂.

### Exemple 2

Dans cet exemple, des cellules El-Cell^{®} sous flux de 0,6 mL/min d'oxygène pur ont été utilisées.

Elles sont composées des mêmes éléments que ceux cités dans l'exemple 1.

Ces cellules sont déchargées à 20°C et 10 µA.

La figure 2 représente l'évolution du potentiel (V) en fonction de la capacité (mAh) en régime de décharge des cellules El-Cell^{®} mettant en œuvre les électrolytes 1 (avec TEGDME) et 3 (avec du carbonate de propylène).

Les résultats montrent une forte amélioration de la capacité déchargée pour la cellule mettant en œuvre un électrolyte liquide selon l'invention comprenant du TEGDME, comparativement à celle mettant en œuvre l'électrolyte liquide 3 non conforme à l'invention comprenant du carbonate de propylène.

### Exemple 3

Les conductivités ioniques des différents électrolytes liquides 1 à 3 décrits précédemment ont été mesurées à température ambiante selon le protocole suivant.

Les mesures de conductivité ont été réalisées sous atmosphère argon à l'aide d'un conductimètre thermostaté. La cellule de mesure est plongée dans l'électrolyte mis à 25 °C.

Les résultats sont rassemblés dans le tableau 2 suivant.

**[Tableau 2]**

| **Electrolyte** | **Conductivité (mS/cm)** |
|---|---|
| Electrolyte 1 *(invention)* | 15,0.10⁻² |
| Electrolyte 2 *(invention)* | 13,1.10⁻² |
| Electrolyte 3 *(hors invention)* | 11,3.10⁻² |

L'ensemble des électrolytes présentent de bonnes performances en termes de conductivité ionique.

## Revendications

1. Electrolyte liquide pour une batterie métal/oxygène, comprenant :
- au moins un sel de métal alcalin ou alcalino-terreux, en particulier un sel de lithium ;
- au moins un solvant fluorocarboné possédant une solubilité pour l'oxygène d'au moins 30 % v/v ;
- au moins un agent solubilisant fluoré, distinct du ou desdits solvants fluorocarbonés, choisi parmi des composés hydrocarbonés mono-, poly- ou per-fluorés, saturés, insaturés et/ou aromatiques, linéaires, ramifiés et/ou cycliques ayant de 4 à 18 atomes de carbone, dont l'enchainement carboné est porteur d'au moins un motif terminal polaire, et éventuellement interrompu par un ou plusieurs hétéroatomes, notamment choisis parmi les atomes d'oxygène et de soufre et les radicaux -N(R¹)-, -B(R¹)- et -P(R¹R²)-, avec R¹ et R², identiques ou différents, représentant un atome d'hydrogène ou un radical alkyle en C₁ à C₄ ; et
- au moins un solvant de type éther.

2. Electrolyte liquide selon la revendication précédente, dans lequel le ou lesdits solvants fluorocarbonés sont choisis parmi des composés perfluorocarbonés, saturés, insaturés et/ou aromatiques, linéaires, ramifiés et/ou cycliques, ayant de 4 à 18 atomes de carbone, en particulier parmi les perfluoroalcanes, linéaires ou cycliques, en C₆ à C₁₂, ledit solvant fluorocarboné étant plus particulièrement la perfluorodécaline.

3. Electrolyte liquide selon l'une quelconque des revendications précédentes, dans lequel le ou lesdits agents solubilisants fluorés répondent à la formule générale (II) suivante :
Z-[(C_{c}F_{2c})-(X)ₙ]_{q}-(CₑH₂ₑ)ₚ-Y (II)
dans laquelle :
- C_{c}F_{2c} représente un groupement perfluorocarboné saturé, linéaire ou ramifié, avec c représentant un entier allant de 4 à 18 ;
- X est choisi parmi les atomes d'oxygène et de soufre, et les radicaux -NCR¹)-, -B(R¹)- et - P(R¹R²)- avec R¹ et R², identiques ou différents, représentant un atome d'hydrogène ou un radical alkyle en C₁ à C₄,
- n est égal à 0 ou 1,
- q est égal à zéro ou est un entier variant de 1 à 15, étant entendu que lorsque q est supérieur ou égal à 2, X, c et n pouvant être identiques ou différents dans chacune des unités -[(C_{c}F_{2c})-(X)ₙ]-,
- CₑH₂ₑ représente un radical hydrocarboné saturé, linéaire ou ramifié, avec e représentant un entier allant de 1 à 12 ;
- p est égal à 0 ou 1,
- Z représente un atome d'hydrogène, de fluor ou un groupement hydroxyle, et Y représente un groupement -OH, -OR³, -OM, -NH₂, -NHR³, -N(R³)₂,
- N(R³)₃⁺, -COOH, -COOM, -COOR³, -OCOR³, -CN, -SO₃H, -SO₃M, avec R³ étant un radical alkyle en C₁ à C₄ et M un ion métallique, en particulier un cation de métal alcalin ou alcalino-terreux, par exemple lithium ; ou Z et Y sont liés l'un à l'autre pour former un motif polaire de type oxo, éther ou ester.

4. Electrolyte liquide selon l'une quelconque des revendications précédentes, dans lequel le ou lesdits agents solubilisants fluorés sont choisis parmi les perfluoroalcanols et les perfluoroesters d'alkyle, notamment en C₇ à C₁₅, en particulier les perfluoroalcanols acycliques ; de préférence ledit agent solubilisant fluoré est le perfluorooctanol.

5. Electrolyte liquide selon l'une quelconque des revendications précédentes, dans lequel le ou lesdits solvants fluorocarbonés et le ou lesdits agents solubilisants fluorés, en particulier tels que définis en revendications 2 à 4, sont présents dans un rapport volumique solvant(s) fluorocarboné(s)/agent(s) solubilisant(s), compris entre 10/1 et 3/2, en particulier entre 6/1 et 2/1, notamment entre 5/1 et 3/1 et plus particulièrement d'environ 4/1.

6. Electrolyte liquide selon l'une quelconque des revendications précédentes, ledit électrolyte comprenant au moins la perfluorodécaline à titre de solvant fluorocarboné en association avec au moins du perfluorooctanol à titre d'agent solubilisant fluoré.

7. Electrolyte liquide selon l'une quelconque des revendications précédentes, dans lequel le ou lesdits solvants éthers sont choisis parmi le 1,3-dioxolane, le tétrahydrofurane, les éthers de formule générale CH₃O-[CH₂CH₂O]_{q}-CH₃, avec q étant un entier compris entre 1 et 10, en particulier entre 1 et 6, notamment entre 1 et 5 et plus particulièrement entre 1 et 4, tels que le 1,2-diméthoxyéthane, le di(2-méthoxyéthyl)éther, le diméthyléther de triéthylène glycol ; le diméthyléther de tétraéthylèneglycol ; et les mélanges de ceux-ci ; en particulier le ou lesdits solvants éthers sont choisis parmi le 1,2-diméthoxyéthane, le diméthyléther de tétraéthylèneglycol et leurs mélanges.

8. Electrolyte liquide selon l'une quelconque des revendications précédentes, ledit électrolyte comprenant :
- de 20 à 90 % volumique, en particulier de 50 à 90 % volumique, d'un ou plusieurs solvants fluorocarbonés, en particulier tels que définis en revendication 2, notamment la perfluorodécaline ;
- de 5 à 60 % volumique, en particulier de 10 à 25 % volumique, d'un ou plusieurs agents solubilisants fluorés, en particulier tels que définis en revendication 3 ou 4, tel que le perfluorooctanol ; et
- de 2 à 30 % volumique, en particulier de 5 à 15 % volumique, d'un ou plusieurs solvants éthers, en particulier tels que définis en revendication 7, par exemple le TEGDME et/ou DME;
les pourcentages volumiques étant donné par rapport au volume de total de l'électrolyte liquide.

9. Electrolyte liquide selon l'une quelconque des revendications précédentes, dans lequel le sel de métal alcalin ou alcalino-terreux est un sel de lithium, en particulier choisi parmi LiTFSI, LiTDI ou LiFSI, de préférence du LiTFSI ou LiFSI et plus préférentiellement du LiTFSI.

10. Utilisation d'un électrolyte liquide tel que défini selon l'une quelconque des revendications 1 à 9 dans une batterie métal/oxygène, en particulier une batterie lithium/oxygène.

11. Batterie métal/oxygène comprenant un électrolyte liquide tel que défini selon l'une quelconque des revendications 1 à 9, ladite batterie étant notamment une batterie lithium/oxygène.

12. Batterie métal/oxygène selon la revendication précédente, ladite batterie comprenant une électrode négative métallique et une électrode positive réductrice de l'oxygène.

13. Objet portable comprenant une batterie métal/oxygène telle que définie selon la revendication 11 ou 12.
